Europäisches Patentamt

European Patent Office

Office européen des brevets

(11) Publication number: **0 158 460**
**B1**

# (12) EUROPEAN PATENT SPECIFICATION

(45) Date of publication of patent specification: **20.01.88**

(51) Int. Cl.⁴: **A 23 L 1/22**

(21) Application number: **85301922.2**

(22) Date of filing: **19.03.85**

(54) Method for fixing volatile flavorants in extruded vitreous substrates.

(30) Priority: **19.03.84 US 591150**

(43) Date of publication of application:
**16.10.85 Bulletin 85/42**

(45) Publication of the grant of the patent:
**20.01.88 Bulletin 88/03**

(84) Designated Contracting States:
**AT BE CH DE FR GB IT LI LU NL SE**

(56) References cited:
**GB-A-1 278 216**
**US-A-2 856 291**
**US-A-2 919 989**
**US-A-3 041 180**
**US-A-3 657 010**
**US-A-4 022 924**

(73) Proprietor: **GENERAL FOODS CORPORATION**
**250 North Street**
**White Plains, N.Y. 10625 (US)**

(72) Inventor: **Pickup, John George**
**403, Simpson Place**
**Peekskill, NY 10566 (US)**
Inventor: **Saleeb, Fouad Zaki**
**15, Gregory Place**
**Pleasantville, NY 10570 (US)**

(74) Representative: **Baillie, Iain Cameron et al**
**c/o Ladas & Parry Isartorplatz 5**
**D-8000 München 2 (DE)**

Courier Press, Leamington Spa, England.

**Description**

The present invention relates to a method for fixing volatile flavorants in a food-approved substrate, and more particularly to a low-temperature methodology for fixing volatile flavorants in an extruded "carbohydrate-glass" substrate.

The problems involved in the storage and utilization of volatile flavorants, and specifically essential oils, in dry form, are greatly complicated by the extreme sensitivity of substrate constituents to the effects of heat, light, air and moisture. Therefore, there has been a longstanding need for a food-approved encapsulation substrate which is essentially solid and moisture-stable. A promising technique to solve the problems attendant to the fixation of highly volatile flavorants, is via encapsulation of the highly volatile flavorant in a moisture-stable substrate. One such method is by extrusion, although spray-drying of flavors on a dextrin or other carbohydrate substrate is a common technique.

US—A—3,041,180 discloses a method for fixing flavorants in an extruded carbohydrate substrate according to the following methodology: the product is obtained by emulsifying an essentially water-insoluble essential oil with a molten mixture of glycerol and corn syrup solids as the continuous phase, extruding the emulsified mass in the form of filaments into a cold fluid, preferably an organic solvent for the essential oil which is a nonsolvent for the corn syrup solids, followed by impact breaking of the solidified filaments into small particles of usable form and then holding the particles in the solvent, preferably for an extended period to remove essential oil from the surfaces of the particles, together with a substantial portion of the residual moisture contained on and in the particles. This methodology is conducted in excess of 130°C.

Also it is known that the entrapping of a volatile flavoring agent such as essential oils in an amorphous substrate of mixtures of carbohydrates has many advantages. For example in US—A—2,856,291 a procedure is described which comprises preparing a hot liquid emulsion of a volatile liquid flavoring agent in an edible carrier base such as a melted sugar base. This is then extruded through an orifice into the atmosphere in the form of a continuous stream of narrow cross-section. Said stream is permitted to cool to attain a plastic condition and is then subject to cutting or pinching to divide into rod-like elements.

US—A—2,919,989 sets forth a specific base within which to fix the flavoring. Said base containing essentially (on a dry basis):

|  | % by wt. |
| --- | --- |
| Sucrose | 15—40 |
| Lactose | 10—15 |
| Maltose | 15—40 |
| Dextrose | 10—50 |
| Dextrin | 0—15 |

This base is found to be an improvement in that it does not crystallize while hot nor when cooled, but provides the required melting temperature and viscosity.

Also GB—A—1,278,216 provides for locking volatile flavor components into oligo-saccharides. A sugars mixtures is heated at a temperature, and for a sufficient time, to cause the formation of oligo-saccharides in an amount sufficient to ensure a resultant sugar polymers base. Said base is diluted with water in order that the sugars comprise 70—80% by weight of the base. The flavors are mixed with a binding agent and then added to the sugar base. The resultant mixture is then dried to less than 5% moisture and may be ground to give a powdered, amorphous product.

In EP—A—146,308 there is claimed a method of producing a moisture stable product in which a low molecular weight water-soluble material is admixed with a high molecular weight water-soluble polymeric material in an aqueous solution, a volatile flavorant added to the solution which is then spray dried within a temperature range of from 100°C to 180°C as an inlet temperature and from 50°C to 80°C as an outlet temperature range.

Summary of the invention

The present invention provides a methodology for fixing a volatile flavorant in an extruded "carbohydrate-glass" substrate. Moreover, the present method eliminates the following: maintaining the admixture at high temperatures is not necessary; emulsifiers or glycerine-type plasticizers are not required; the present invention allows the volatile or essential oil to be dry-blended (i.e., no added moisture) at ambient temperatures with the components of the substrate directly, or to be metered into the dry substrate materials. The method employed herein relies solely on the extrusion of ingredients enumerated hereinbelow to form a glass. Extrusion temperature is regulated so that it is above the glass transition state of the substrate but at or below the melting point of the minor ingredient, the low molecular weight ingredient which may be a low molecular weight carbohydrate, a food-acid or combinations thereof, comprising from 10%—30% of the substrate. For example, when one uses maltose monohydrate and a malto-dextrin having a D.E. (dextrose equivalent) of about 10, the extrusion is carried out at or below 100°C since maltose monohydrate has a melting point of about 102°—103°C. The glass transition temperature of the substrate mixture is less than the melting point of the low molecular weight ingredient.

To employ the present methodology, one mixes the minor component and the major component with a volatile flavorant. The minor component is a low molecular weight (90—500 molecular weight) water-soluble crystalline carbohydrate and having a melting point of 80°C to 180°C or food acid material. This "minor" component is responsible for from 10% to 30% by weight of the substrate. The major component which is at least 70% by weight of the substrate mixture is a material which contains at least 95% high molecular weight polymeric carbohydrate materials, (above 1,000). The major and minor components are admixed or dry-blended with the volatile flavorant that one wishes to encapsulate. There is no need to add moisture to the dry-blended mixture. The admixture is extruded within a temperature range as described hereinbelow. Unlike other methods, the present invention involves exposing both substrate and volatile flavorant to relatively short periods of elevated temperature. The product formed thereby retains flavorant levels up to about 15%, and is moisture-stable, free-flowing and of high density after the extrudate is ground.

Detailed description

The present methodology includes the steps outlined hereinbelow, wherein "dry" ingredients, inclusive of a volatile flavorant, are admixed or dry-blended, and extruded within a critical temperature range as follows. For illustrative purposes the substrate materials shall include a polymeric carbohydrate material containing predominately high molecular weight carbohydrate constituents; a malto-dextrin is such a material. The malto-dextrin is preferably of a D.E. of from 5 D.E. 20 D.E. One dry blends from 10% to 30% of a low molecular weight material, such as a monosaccharide or disaccharide with at least 70% of a malto-dextrin, said malto dextrin possessing by weight less than 5% monosaccharides and disaccharides. For the minor ingredient component, a carbohydrate of low molecular weight may be used. The preferred low molecular weight carbohydrates are: fructose, glucose, maltose and mannose. To these components, the volatile flavorant is added.

Another class of materials may be operatively substituted for low molecular weight carbohydrates. Food-approved acids display similar utility. For purposes of the present invention food-approved acids shall include adipic acid, citric acid and malic acid. In addition, these acids may be combined with low molecular weight carbohydrates, with the combination comprising the low molecular weight component. An illustrative combination of ingredients for use in the present invention shall be composed of LO-DEX 10, a maltodextrin, maltose monohydrate and orange oil.

Amaizo Lo-Dex 10 is a pure, white, powdered, malto-dextrin product produced by hydrolyzing corn starch using a unique process. Lo-Dex 10 is a very low D.E. product which is essentially non-deliquescent, bland and has a very low sweetness level.

Typical chemical and physical data

| | |
|---|---|
| Moisture | 6.0 |
| Dextrose equivalent | 11.0 |
| $SO_2$ (M.W.) | 40 ppm |
| pH (1:1) | 4.7 |
| Bulk density (approx.) | 49.66 kg/m³ (31 lbs/cu ft) |
| Carbohydrate composition (approx., d.b.) | |
|    Monosaccharides | <1% |
|    Disaccharides | 2% |
|    Trisaccharides | 3% |
|    Tetrasaccharides & higher | 94+% |
| Particle size | Powder |
| Thru 0.47 mm U.S. Sieve screen mesh size (40 mesh) | 100% |
| Thru 0.174 mm U.S. Sieve screen mesh size (100 mesh) | 85% |

3

**0 158 460**

Although the type of extruder appears to be immaterial, for purposes of the present invention, a Brabender Extruder (manufactured Brabender Corp., South Hackensack, New Jersey) will be used for illustrative purposes. The extrusion, carried out within a Brabender extruder, is characterized by a zonal temperature differential.

The present invention is designed to operate within a specific temperature range. The extrusion temperature should be above the glass transition state of the substrate mixture, but at or below the melting point of the minor ingredient. Extrusion above the preferred range results in a lowered fix, but if the extruder temperature is not high enough the "glass" substrate will not form. As one can see by the Examples set out hereinbelow, temperatures, including die temperatures exceeding melting points of minor ingredients inhibit the fixative qualities of the substrate. When using conventional food extruders it is often necessary to use die temperatures that exceed the melting point of the minor ingredient. While it is preferable to restrict die temperatures to the parameters set out hereinbelow an elevated temperature is often necessary when one uses small diameter die apertures. An elevated die temperature may be necessary to prevent clogging of the die aperture and to facilitate outflow of the extrudate; however, the extrudate would be exposed to such elevated die temperatures for relatively short periods of time. Still, it has been found that most preferably the die temperature should not greatly exceed the melting point of the minor ingredient, with the efficacy of the method decreasing with increased die temperatures. Thus the extrusion will occur essentially at or below the melting point of the minor ingredients.

The volatile flavorants shall be characterized, for purposes of the present invention as essential oils or low boiling point volatiles, having boiling points of from 20°C to 200°C. For example, in orange oil, the volatile constituents include acetaldehyde, terpenes, esters, and alcohols. In the present method, other volatiles or essential oils may be operatively substituted herein.

The examples set out hereinbelow, are for illustrative purposes.

Example 1

125 g of maltose-monohydrate (Sigma Chemical Co., St. Louis, Missouri) and 375 g of Lo-Dex 10 (manufactured by Amaizo American Maize Products Company, Hammond, Ind.) were mixed in a five-quart Hobart-type mixer (manufactured by Hobart Inc., Hawthorne, New York). 20 ml (17.6 g) of ethylbutyrate was added to the above-stated combination. The whole system was allowed to mix for an additional 1.5 minutes. During the mixing period the blending apparatus was covered to minimize volatile loss, if any. The homogeneous mixture was placed in the feed end of the extruder. The type of extruder was a Brabender multi-zoned extruder. This type of extruder possesses a single screw within a (.75 inch) 1.9 cm diameter barrel. This type of extruder employs independently controlled temperature zones, with the die-head temperature being elevated above barrel temperature as a result of friction and as a means of assuring unimpeded outflow of the extrudate. Extrusion conditions are as follows:

| Zone number: | I | II | III | Die |
|---|---|---|---|---|
| Temperature: | No heat | 98°C | 98°C | 105°C |

The glass transition temperature of the substrate mixture is about 80°C. The extruder has a screw ratio of 2:1, a one-quarter inch die and a shear rate of 60 rpm. The admixture was fed through the extruder so that a uniform rope was obtained which was allowed to cool to ambient temperature. The product was a very homogeneous (glassy) material wherein flavor was entrapped. Chemical analysis (gas chromatography) was conducted showing little flavor loss after extrusion. The initial ethylbutyrate fix by the extrusion method was found to be 3.5% by weight and after 3 days having been ground (to −16+25 U.S. Sieve screen mesh sizes) (−1.2 mm+0.7 mm U.S. Sieve screen mesh size) the fix remained at this level.

Example 2

125 g mannose (M.P. 133°C) and 375 g Lo-Dex 10 were mixed together for 3 minutes to which 20 g of lemon oil (terpeneless, lot #2347 from Citrus and Allied Essences, Ltd., Floral Park, New York) was mixed for 2 minutes. The mixture was extruded in a Brabender extruder. The operative conditions follow:

| Zone number: | I | II | III | Die |
|---|---|---|---|---|
| Temperature: | 60°C | 120°C | 130°C | 125°C |

A screw ratio of 2:1 was used with a die measuring (.25 inches) 6 mm having a shear rate of 80 rpm. The product was a stable glassy "structure" wherein the initial lemon oil fix was 3.6% by weight and after 3 days of open storage in a ground (−16+25 U.S. Sieve mesh size) (−1.2 mm+0.7 mm U.S. Sieve mesh size) condition the fix was found to be stable at 3.3% by weight.

Example 3

125 g maltose-monohydrate and 375 g Lo-Dex 10 were mixed together for 3 minutes, to said mixture 20

4

g of orange oil (terpeneless, lot #3358 from citrus and Allied Essences, Ltd., Floral Park, New York) was mixed for 2 minutes. The homogeneous mixture was extruded in the Brabender extruder under the following conditions:

| Zone number: | I | II | III | Die |
|---|---|---|---|---|
| Temperature: | 50°C | 100°C | 100°C | 105°C |

A screw ratio of 2:1, and a (.25 inch) 6 mm die with a shear rate of 60 rpm was applied. The resulting product was a hard, glassy structure which was found to have an initial fix of 2.5% by weight. 10 grams of the ground material was put into an open beaker and retained therein for 3 days after which the fix was found to be stable at 1.8% by weight.

Example 4

To study the effect of extrusion variables on fixation of orange oil the following example was carried out using high maltose corn syrup (HMCS) and citric acid. Dry high maltose corn syrup (HMCS) solids was obtained first by spray drying the syrup with 30% (wt) Lodex 10 in an Anhydro dryer. This dry solid will be called HMCS mix.

614.3 g Lodex 10, 285.7 g HMCS mix (70% HMCS+30% Lodex 10) and 100 g citric acid monohydrate were blended together (dry powder) as in Example I. 52.6 g of orange oil (terpeneless, lot #2395 from citrus and Allied Essences, Ltd.) were added to the dry mix and blended together for an extra 3 minutes. Extrusions were made using a multiple hole die ($\infty 1/16''$ diameter holes ($\infty 1.6$ mm diameter holes) with a single screw Brabender type extruder. The zone and die temperatures were fixed at present conditions to study the efficiency of retaining the orange oil. On extrusion, followed by cooling cord-like ($\infty 1/8''$) ($\infty 3$ mm) strands were obtained which could be easily broken into small pieces. The level of orange oil was analyzed before and after extrusion. The data are given in the table (#1).

TABLE I

| Extruder zone area | I | II | III | Die | Fixed orange oil level |
|---|---|---|---|---|---|
| Run #A | 35°C | 80°C | 90°C | 120 | 4.64% |
| B | 35°C | 80°C | 90°C | 110 | 3.10% |

A relatively high orange oil fix 4.64% (5.0% before extrusion) was obtained when the extrusion conditions were fixed as in Run #A above.

Example 5

2716 g of Lo-Dex 10 and 1087 g high maltose corn syrup (HMCS) mix (70% HMCS and 30% Lo-Dex 10 See Example 4) were dry mixed for 2 min in a Hobart bowl. 200 g of orange oil (terpeneless) were added to the dry mix and all were blended together for an additional 2 min (covered bowl). Extrusions were made using a multiple hole die with a single screw Brabender type extruder. Very uniform cord-like strands ($\infty 2$ mm diameter) were obtained after extrusion with varying orange oil retentions depending on the extrusion condition as outlined in Table II:

TABLE II

| Run # | Extruder zone temperature | | | | Fixed orange oil wt. % |
|---|---|---|---|---|---|
| | I | II | III | Die | |
| A | 25°C | 60°C | 80°C | 120—125°C | 1.71 |
| B | 25 | 60 | 80 | 115—117 | 3.14 |
| C | 25 | 60 | 80 | 104—105 | 2.79 |
| D | 25 | 60 | 80 | 98—100 | 4.71 |
| E | 25 | 60 | 80 | 130 | 1.98 |
| F | 25 | 60 | 90 | 118—120 | 3.00 |

It is evident that excessively high die temperatures (>120°C) should be avoided for efficient orange oil fixation. In fact, exceeding the melting point of the minor ingredient even for short periods of time decreases the ability for the substrate to fix volatile flavorants.

**Claims**

1. A method for fixing a volatile flavorant in an extruded glass substrate comprising the steps of:

(a) dry-blending a minor substrate component of from 10—30% of a low molecular weight of from 90—500 molecular weight water-soluble crystalline carbohydrate, a food-approved acid or combinations thereof, and at least 70% of a high molecular weight water-soluble polymeric carbohydrate material having an average molecular weight above 1000 as a major substrate component with up to 15% by weight of said minor and major components of a volatile flavorant to form a homogeneous mixture; and

(b) extruding said substrate mixture within a temperature range that is above the glass transition state of the substrate mixture and essentially at or below the melting point of minor ingredients, to form an amorphous substrate immediately after extrusion and on cooling and to entrap said flavorant therein.

2. The method according to claim 1 wherein the low molecular weight water-soluble carbohydrate is chosen from the group consisting of maltose, mannose, glucose, high maltose corn syrup and combinations thereof.

3. The method according to claim 1 wherein the low molecular weight water-soluble food-approved acid is chosen from the group consisting of adipic acid, citric acid, malic acid and combinations thereof.

4. The method according to claim 1 wherein the low molecular weight water-soluble crystalline carbohydrate possesses a melting point of from 80°C to 180°C.

5. The method according to claim 1, wherein the polymeric carbohydrate is a malto-dextrin having a dextrose equivalent of from 5 D.E. to 20 D.E.

6. A method according to claim 1 wherein the volatile flavorant is an essential oil.

7. A method according to claim 1 wherein the volatile flavorant possesses a boiling point of from 20°C to 200°C.

8. A product made according to the process described in claim 1 wherein the polymeric carbohydrate is a malto-dextrin having a D.E. of 10.

9. A product made according to the process described in claim 1 comprising about 25% maltose and about 75% malto-dextrin having a D.E. of from 5 to 15.

**Patentansprüche**

1. Verfahren zum Fixieren eines flüchtigen Duftstoffes in einem extrudierten Glassubstrat, mit folgenden Schritten:

(a) eine kleinere Substratkomponente, die aus 10 bis 30 Gew.-% eines niedrigmolekulaten wasserlöslichen kristallinen Kohlenhydrats mit einem Molekulargewicht von 90 bis 500 aus einer für Lebensmittel zugelassenen Säure oder aus Kombinationen derselben besteht, und mindestens 70% eines hochmolekularen, wasserlöslichen polymeren Kohlenhydratmaterials mit einem durchschnittlichen Molekulargewicht über 1000 als Hauptkomponente des Substrats werden trocken mit einem flüchtigen Duftstoff in einer Menge von bis zu 15 Gew.-% der kleineren und der Hauptkomponente zu einem homogenen Gemenge vermengt; und

(b) das Substratgemenge wird in einem Temperaturbereich extrudiert, der über dem Glasübergangszustand des Substratgemisches und im wesentlichen auf oder unter dem Schmelzpunkt von kleineren Bestandteilen liegt, so daß unmittelbar nach dem Extrudieren und beim Abkühlen ein amorphes Substrat erhalten wird und der Duftstoff darin eingeschlossen wird.

2. Verfahren nach Anspruch 1, dadurch gekennzeichnet, daß das neidrigmolekulare wasserlösliche Kohlenhydrat aus der Gruppe ausgewählt wird, die aus der Maltose und der Mannose, dem maltosereichen Maissirup und Kombinationen derselben besteht.

3. Verfahren nach Anspruch 1, dadurch gekennzeichnet, daß die niedrigmolekulare, wasserlösliche, für Lebensmittel zugelassene Säure aus der Gruppe ausgewählt ist, die aus der Adipinsäure, der Zitronensäure, der Apfelsäure und deren Kombinationen besteht.

4. Verfahren nach Anspruch 1, dadurch gekennzeichnet, daß das niedrigmolekulare wasserlösliche kristalline Kohlenhydrat einen Schmelzpunkt von 80°C bis 180°C besitzt.

5. Verfahren nach Anspruch 1, dadurch gekennzeichnet, daß das polymere Kohlenhydrat ein Maltodextrin mit 5 bis 20 Glucoseäquivalenten ist.

6. Verfahren nach Anspruch 1, dadurch gekennzeichnet, daß der flüchtige Duftstoff ein ätherisches Öl ist.

7. Verfahren nach Anspruch 1, dadurch gekennzeichnet, daß der flüchtige Duftstoff einen Siedepunkt von 20°C bis 200°C besitzt.

8. Das nach dem Verfahren nach Anspruch 1 hergestellte Produkt, in dem das Polymere Kohlenhydrat ein Maltodextrin mit 10 Glucoseäquivalenten ist.

9. Das nach dem Verfahren nach Anspruch 1 hergestellte Produkt, das etwa 25% Maltose und etwa 75 Maltodextrin mit 5 bis 15 Glucoseäquivalenten enthält.

## Revendications

1. Procédé de fixation d'un agent aromatique volatil dans un substrat de verre extrudé, comprenant les stades suivants:

a) mélange à sec d'un constituant de substrat mineur de 10 à 30% d'un hydrate de carbone cristallin soluble dans l'eau de faible masse moléculaire, d'une masse moléculaire de 90 à 500, d'un acide agréé pour l'utilisation alimentaire ou d'associations de ces acides, et d'au moins 70% d'un hydrate de carbone polymère soluble dans l'eau de masse moléculaire élevée ayant une masse moléculaire moyenne supérieure à 1000 comme constituant principal du substrat avec jusqu'à 15% en poids de ces constituants mineur et principal d'un agent aromatique volatil pour former un mélange homogène; et

b) extrusion de ce mélange de substrats dans un intervalle de températures qui est au-dessus de l'état de transition vitreuse du mélange de substrats, et pratiquement égal ou inférieur au point de fusion des ingrédients mineurs, pour former un substrat amorphe aussitôt après l'extrusion et par refroidissement et pour y piéger cet agent aromatique.

2. Procédé suivant la revendication 1, dans lequel l'hydrate de carbone soluble dans l'eau de faible masse moléculaire est choisi dans le groupe constitué du maltose, du mannose, du glucose, d'un sirop de maïs à haute teneur en maltose et d'associations de ceux-ci.

3. Procédé suivant la revendication 1, dans lequel l'acide agréé pour l'utilisation alimentaire soluble dans l'eau de faible masse moléculaire est choisi dans le groupe constitué de l'acide adipique, de l'acide citrique, de l'acide malique et d'associations de ceux-ci.

4. Procédé suivant la revendication 1, dans lequel l'hydrate de carbone cristallin soluble dans l'eau de faible masse moléculaire possède un point de fusion de 80 à 180°C.

5. Procédé suivant la revendication 1, dans lequel l'hydrate de carbone polymère est une malto-dextrine ayant un équivalent de dextrose de 5 E.D. à 20 E.D.

6. Procédé suivant la revendication 1, dans lequel l'agent aromatique volatil est une huile essentielle.

7. Procédé suivant la revendication 1, dans lequel l'agent aromatique volatil possède un point d'ébullition de 20°C à 200°C.

8. Produit préparé par le procédé décrit dans la revendication 1, dans lequel l'hydrate de carbone polymère est une malto-dextrine ayant un E.D. de 10.

9. Produit préparé conformément au procédé décrit dans la revendication 1, comprenant environ 25% de maltose et environ 75% d'une malto-dextrine ayant un E.D. de 5 à 15.